# FASCICULE DE BREVET EUROPEEN

(11) **EP 4 623 010 B1**
(45) Date de publication et mention de la délivrance du brevet: **30.09.2026**
(21) Numéro de dépôt: 23810379.0
(22) Date de dépôt: 24.11.2023
(51) Int. Cl.: C08B 37/00

(54) **PROCÉDÉ D'EXTRACTION DU XYLOGLUCANE DES PAROIS PRIMAIRES DES CELLULES VÉGÉTALES**
VERFAHREN ZUR EXTRAKTION VON XYLOGLUCAN AUS DEN PRIMÄRWÄNDEN VON PFLANZENZELLEN
METHOD FOR EXTRACTING XYLOGLUCAN FROM THE PRIMARY WALLS OF PLANT CELLS

(30) Priorité: 25.11.2022 FR 2212319
(43) Date de publication de la demande: 01.10.2025
(73) Titulaire: Funcell, 38610 Gières (FR); Centre National de la Recherche Scientifique, 75016 Paris (FR)
(72) Inventeur: MANTE, Josselin, 38160 Gieres (FR); HEUX, Laurent, 75016 Paris (FR); LEGUY, Julien, 38610 Gieres (FR)
(74) Mandataire: IP Trust
(86) Numéro de dépôt international: PCT/EP2023/082962
(87) Numéro de publication internationale: WO 2024/110624

(56) Documents cités:
- TAKUMI TAKEDA ET AL: "Anionic derivatives of xyloglucan function as acceptor but not donor substrates for xyloglucan endotransglucosylase activity", PLANTA ; AN INTERNATIONAL JOURNAL OF PLANT BIOLOGY, SPRINGER, BERLIN, DE, vol. 227, no. 4, 27 November 2007 (2007-11-27), pages 893 - 905, XP019590183, ISSN: 1432-2048
- FARHAT WISSAM ET AL: "Hemicellulose extraction and characterization for applications in paper coatings and adhesives", INDUSTRIAL CROPS AND PRODUCTS, vol. 107, 13 June 2017 (2017-06-13), pages 370 - 377, XP085199593, ISSN: 0926-6690, DOI: 10.1016/J.INDCROP.2017.05.055
- MA YICONG ET AL: "Co-preparation of pectin and cellulose from apple pomace by a sequential process", JOURNAL OF FOOD SCIENCE AND TECHNOLOGY, SPRINGER (INDIA) PRIVATE LTD, INDIA, vol. 56, no. 9, 18 June 2019 (2019-06-18), pages 4091 - 4100, XP036870919, ISSN: 0022-1155, [retrieved on 20190618], DOI: 10.1007/S13197-019-03877-5
- SUN R ET AL: "Fractionation and characterization of polysaccharides from abaca fibre", CARBOHYDRATE POLYMERS, APPLIED SCIENCE PUBLISHERS , LTD BARKING, GB, vol. 37, no. 4, 1 December 1998 (1998-12-01), pages 351 - 359, XP004149685, ISSN: 0144-8617, DOI: 10.1016/S0144-8617(98)00046-0

## Description

### DOMAINE DE L'INVENTION

La présente invention se rapporte au domaine de l'extraction d'une hémicellulose comprise dans les parois primaires des cellules végétales. Notamment, la présente invention concerne un procédé d'extraction du xyloglucane contenu dans les parois primaires des cellules végétales. A cet égard, la présente invention propose un procédé d'extraction de xyloglucane sous forme de polymère compatible avec les contraintes environnementales et qui présente un rendement suffisant pour son utilisation à l'échelle industrielle.

### ARRIERE PLAN TECHNOLOGIQUE DE L'INVENTION

Les graines de Tamarin constituent une source de xyloglucane souvent privilégiée. Ce choix est notamment motivé par l'abondance des graines, l'abondance du xyloglucane dans ces mêmes graines mais également par la simplicité du procédé d'extraction du xyloglucane à partir des graines de Tamarin.

Néanmoins, il existe aujourd'hui une volonté de diversifier les sources d'approvisionnement. Parmi les sources d'approvisionnement d'intérêts et/ou alternatives, les sous-produits agro-alimentaires présentent un intérêt particulier. Notamment, ces sous-produits comprennent d'une quantité significative de parois primaires de cellules végétales lesquelles comprennent du xyloglucane.

A titre d'exemple, et parmi les sous-produits agro-alimentaires à considérer pour l'extraction du xyloglucane, le marc de pomme ou encore les sous-produits d'agrumes issues de l'extraction des jus présentent un intérêt particulier.

A cet égard, le document [1] cité à la fin de la description divulgue un procédé d'extraction du xyloglucane des parois primaires des cellules de marc de pomme.

Toutefois, ce procédé d'extraction présente un nombre d'étapes relativement important, ainsi que des rendements et des puretés faibles, le rendant ainsi moins compatible avec une mise en œuvre industrielle de l'extraction du xyloglucane.

Par ailleurs, le procédé d'extraction considéré dans le document [1] comprend également une étape de délignification avec du chlorite de sodium (NaClO₂) qui est connu pour sa toxicité, notamment sa toxicité environnementale.

Enfin, les quantités de soude considérées lors de la mise en œuvre de ce procédé sont relativement importantes.

Takeda et al., Planta (2008) 227:893-905 divulgue un procédé d'extraction de xyloglucane contenu dans les parois primaires de rose "Paul's Scarlet", une plante dicotylédone, consistant en : (a) le mélange de parois primaires de cellules de la plante avec une solution aqueuse de KOH 0,7 M comprenant également 0,1% NaBH₄ à 25°C pendant 24 heures, pour obtenir un produit solide comprenant majoritairement de l'holocellulose ; et (b) l'extraction de xyloglucane de l'holocellulose avec une solution aqueuse de NaOH 7 M comprenant aussi 0,1% NaBH₄ à 37°C pendant 24 heures.

Ainsi, un but de la présente invention est de proposer un procédé d'extraction du xyloglucane à partir des parois primaires de cellules végétales qui présente un nombre d'étapes limité au regard des procédés connu de l'état de la technique tout en permettant l'extraction efficace (hauts rendements et hautes puretés) du xyloglucane sous forme de polymère (hautes masses moléculaires).

Un autre but de la présente invention est également de proposer un procédé d'extraction du xyloglucane à partir des parois primaires de cellules végétales et dont le rendement élevé est compatible avec une mise en œuvre industrielle.

Un autre but de la présente invention est également de proposer un procédé d'extraction du xyloglucane à partir des parois primaires de cellules végétales et qui met en œuvre des quantités de base forte réduite au regard des procédés connus de l'état de la technique.

### BREVE DESCRIPTION DE L'INVENTION

Les buts sont, au moins en partie, atteints par un procédé d'extraction de xyloglucane contenu dans les parois primaires de cellules végétales, le procédé comprenant l'exécution des étapes suivantes :
a) une première étape qui comprend le mélange de parois primaires de cellules végétales, natives ou extraites, avec une première solution aqueuse et dans laquelle est ajoutée une base forte à une concentration comprise entre 0,1 mol/L et 0,75 mol/L, avantageusement entre 0,25 mol/L et 0,5 mol/L,
   l'exécution de la première étape conduisant à la formation d'un premier résidu liquide et d'un premier produit solide, ce premier produit solide comprenant majoritairement de l'holocellulose ;
b) une deuxième étape de mélange du premier produit avec une deuxième solution, la deuxième solution comprenant la base forte à une concentration comprise entre 1 mol/ L et 3 mol/L, avantageusement comprise entre 2 mol/L et 3 mol/L, la deuxième étape conduisant à la séparation de la cellulose et du xyloglucane contenus dans ledit premier produit.

Selon un mode de mise en œuvre, la première étape a) exécutée en deux sous-étapes successives et qui comprennent :
a1) une première sous-étape qui comprend le mélange des cellules végétales avec la première solution aqueuse, le mélange de la première solution aqueuse avec les cellules végétales présentant un pH compris entre 3 et 7, avantageusement entre 4 et 7, encore plus avantageusement entre 4 et 5 ;
a2) une deuxième sous-étape qui comprend l'ajout de la base forte, à une concentration comprise entre 0,1 mol/L et 0,75 mol/L, avantageusement entre 0,25 mol/L et 0,5 mol/L, au mélange obtenu à l'issue de la première sous-étape a1).

Selon un mode de mise en œuvre, la première solution aqueuse comprend une espèce acide de sorte que le pH résultant du mélange de la première solution aqueuse et des cellules végétales soit compris entre 3 et 7, avantageusement entre 4 et 7, encore plus avantageusement entre 4 et 5.

Selon un mode de mise en œuvre, l'espèce acide comprend au moins l'une des espèces choisies parmi : acide citrique, l'acide acétique, acide nitrique.

Selon un mode de mise en œuvre, le pH, compris entre 3 et 7, avantageusement entre 4 et 7, encore plus avantageusement entre 4 et 5, du mélange de la première solution aqueuse et des cellules végétales résulte de la présence de composés acides dans lesdites cellules végétales.

Selon un mode de mise en œuvre, la première sous-étape a1) est exécutée à une température supérieure à 80 °C et est d'une durée supérieure à 30 min.

Selon un mode de mise en œuvre, la deuxième sous-étape a2) est exécutée à une température supérieure à 60 °C et est d'une durée supérieure à 1 heure.

Selon un mode de mise en œuvre, la deuxième étape b) est exécutée à une température supérieure à 50 °C et est d'une durée supérieure à 1 heure.

Selon un mode de mise en œuvre, la base forte comprend au moins l'un des composés choisis parmi : soude (NaOH), potasse (KOH).

Selon un mode de mise en œuvre, ledit procédé ne met en œuvre ni du chlorite de sodium, ni du chlorure de calcium ni autre oxydant permettant l'élimination de la lignine.

Selon un mode de mise en œuvre, les cellules végétales sont des cellules végétales d'une plante dicotylédone.

Selon un mode de mise en œuvre, la dicotylédone comprend l'une des espèces-choisie parmi : la pomme ou les agrumes.

Selon un mode de mise en œuvre, ledit procédé est limité à l'exécution de la première étape a) et de la deuxième étape b).

### Brève description des dessins

D'autres caractéristiques et avantages de l'invention ressortiront de la description détaillée qui va suivre en référence à la figure annexée sur laquelle :

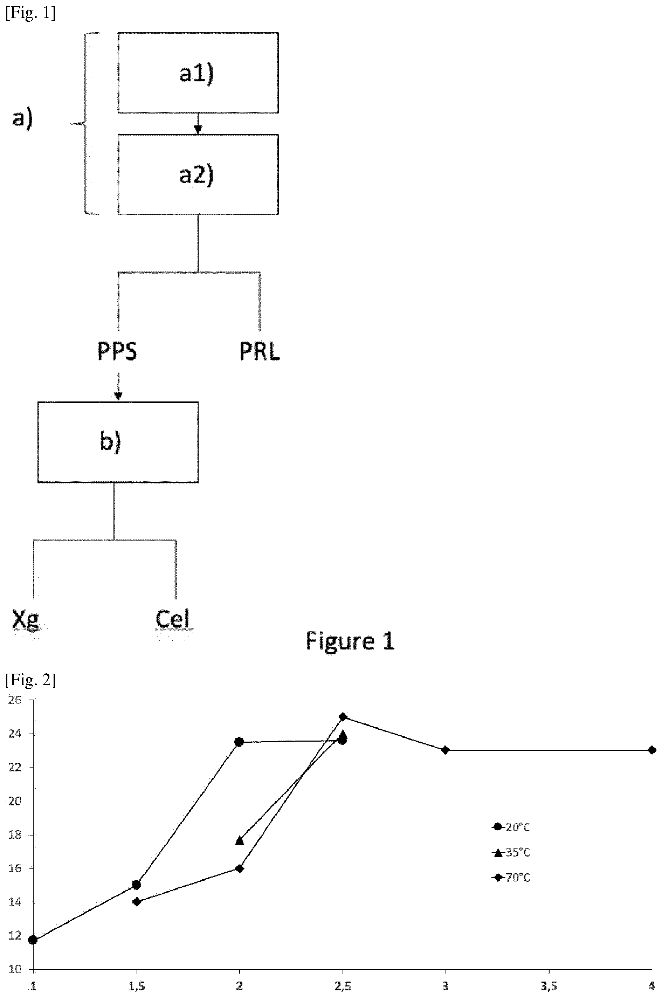

[Fig.1] La [Fig.1] est une illustration schématique du procédé d'extraction du xyloglucane contenu dans les parois primaires des cellules végétales ;
[Fig.2] La [Fig.2] illustre de manière graphique les rendements d'extraction du xyloglucane à partir du premier produit selon l'axe vertical en fonction de la concentration en base forte, notamment en Soude, (en mol/L) selon l'axe horizontal, notamment, ce graphique représente les rendements d'exécution pour différentes températures, et plus particulièrement exécutés à 20°C, 35°C et 70°C ;

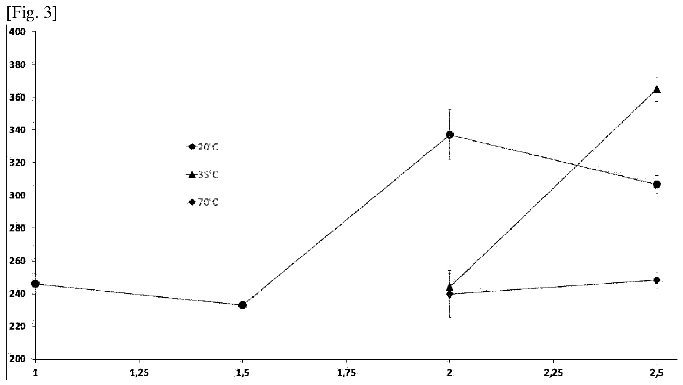

[Fig.3] La [Fig.3] représente de manière graphique l'évolution de la masse molaire de xyloglucane obtenue à l'issue de l'étape b) en fonction de la concentration en base forte et pour différente températures (20°C, 35°C et 70°C) d'exécution de ladite étape b), notamment, l'axe vertical repère la masse molaire (en « 103 g/mol ») en fonction de la concentration en base forte, notamment en Soude, (en mol/L) selon l'axe horizontal, plus particulièrement, les motifs « ronds » représentent les masses molaires obtenues à 20°C, les motifs « triangles » représentent les masses molaires obtenues à 35°C, , et les motifs « losanges » représentent les masses molaires obtenues à 70°C.

### DESCRIPTION DETAILLEE DE L'INVENTION

La présente invention concerne un procédé d'extraction du xyloglucane Xg contenu dans les parois primaires de cellules végétales, et plus particulièrement de plantes dicotylédones.

Le procédé selon la présente invention comprend notamment un nombre relativement limité d'étapes et met en œuvre des composés chimiques dont la toxicité humaine et environnementale est limitée.

Notamment le procédé selon la présente invention comprend l'exécution des étapes suivantes :
a) une première étape consistant en l'exécution de deux sous-étapes successives suivante :
   a1) une première sous-étape qui comprend le mélange des cellules végétales avec une première solution aqueuse, le mélange de la première solution aqueuse avec les cellules végétales présentant un pH compris entre 3 et 7, avantageusement entre 4 et 7, encore plus avantageusement entre 4 et 5 ;
   a2) une deuxième sous-étape qui comprend l'ajout d'une base forte, à une concentration comprise entre 0,1 mol/L et 0,75 mol/L, avantageusement entre 0,25 mol/L et 0,5 mol/L, au mélange obtenu à l'issue de la première sous-étape a1) ;
      l'exécution de ces deux sous-étapes a1) et a2) conduisant à la formation d'un premier résidu liquide PRL et d'un premier produit solide PPS, ce premier produit solide PPS comprenant majoritairement de l'holocellulose ;
b) une deuxième étape de mélange du premier produit avec une deuxième solution, la deuxième solution comprenant la base forte à une concentration comprise entre 1 mol/L et 3 mol/L, avantageusement comprise entre 2 mol/L et 3 mol/L, la deuxième étape conduisant à la séparation de la cellulose Cell et du xyloglucane Xg contenus dans ledit premier produit.

L'exécution de la sous étape a1) est dans certains cas optionnelle de sorte que la première étape peut être limitée au mélange des cellules végétales avec une première solution aqueuse et dans laquelle est ajoutée une base forte à une concentration comprise entre 0,1 mol/L et 0,75 mol/L, avantageusement entre 0,25 mol/L et 0,5 mol/ L. Cette situation intervient notamment lorsque les cellules végétales ont subi une première opération, et notamment une extraction de pectines.

Dans la suite de la description, il sera considéré que la première étape a) est exécutée en deux sous-étapes. Toutefois, l'homme du métier, sur la seule base du présent énoncé, pourra considérer une première étape qui comprend le mélange des parois primaires, natives ou extraites, avec une première solution aqueuse et dans laquelle est ajoutée une base forte à une concentration comprise entre 0,1 mol/L et 0,75 mol/L, avantageusement entre 0,25 mol/L et 0,5 mol/L. L'exécution de la première étape a) conduit à la formation d'un premier résidu liquide et d'un premier produit solide, ce premier produit solide comprenant majoritairement de l'holocellulose.

Par « natives », on entend des parois primaires de cellules végétales brutes. En d'autres termes, par « natives », on entend des parois primaires de cellules végétales n'ayant subi aucune opération chimique, et notamment aucune opération d'extraction de pectines.

Par « extraites », on entend des parois primaires issues de cellules végétales brutes notamment par le biais d'une première opération, par exemple une opération d'extraction de pectines.

Ainsi, la [Fig.1] est une illustration schématique du procédé d'extraction du xyloglucane Xg contenu dans les parois primaires des cellules végétales.

Notamment, le procédé selon la présente invention comprend l'exécution d'une première étape a). Notamment, cette première étape a) comprend l'exécution d'une première sous-étape a1) et d'une deuxième sous-étape a2).

A cet égard, la première sous-étape a1) comprend le mélange des cellules végétales avec une première solution aqueuse. Notamment le mélange de la première solution aqueuse avec les cellules végétales présentant un pH compris entre 3 et 7, avantageusement entre 4 et 7, encore plus avantageusement entre 4 et 5. Selon un mode de mise en œuvre, la première solution aqueuse comprend une espèce acide de sorte que le pH résultant du mélange de la première solution aqueuse et des cellules végétales soit compris entre 3 et 7, avantageusement entre 4 et 7, encore plus avantageusement entre 4 et 5.

Par exemple, la première solution aqueuse peut comprendre de l'acide citrique et/ou de l'acide acétique, et/ou de l'acide nitrique. L'invention n'est cependant pas limitée à la considération de ces trois acides, et l'homme du métier pourra considérer tout autre acide faible ou fort qui ne présente pas de toxicité au regard de l'homme et de l'environnement.

De manière alternative, le pH, compris entre 3 et 7, avantageusement entre 4 et 7, encore plus avantageusement entre 4 et 5, du mélange de la première solution aqueuse et des cellules végétales peut résulter de la présence de composés acides dans lesdites cellules végétales.

La première sous-étape a1) peut avantageusement être exécutée à une température supérieure à 70 °C, avantageusement supérieure à 80 °C encore plus avantageusement supérieure 85 °C. Par ailleurs, la première sous-étape a1) peut être d'une durée supérieure à 15 min, avantageusement supérieure à 30 min encore plus avantageusement 45 min.

A titre d'exemple, la première sous-étape a1) peut être exécutée à une température égale à 90 °C et être d'une durée égale à 1 heure.

L'exécution de la sous-étape a1) permet notamment de séparer pour partie l'holocellulose d'une part, et un surnageant d'autre part. Ce surnageant comprend des sucres libres, des oligosaccharides et des pectines.

Les conditions d'acidité « douces » (légèrement acide, pH supérieur à 3) permettent de préserver la structure de l'holocellulose, et notamment le xyloglucane Xg qu'elle contient. Il est entendu que l'holocellulose comprend de la cellulose Cell et du xyloglucane Xg (le xyloglucane Xg étant une hémicellulose).

L'exécution de la première sous-étape a1) à une température supérieure à 70 °C permet également de solubiliser dans le surnageant l'amidon susceptible d'être présent dans les parois primaires des cellules végétales considérées.

Toutefois, certaines pectines susceptibles d'être présentes dans les parois primaires des cellules végétales ne sont pas nécessairement solubles en milieu acide. Ainsi, et selon la présente invention, il est proposé de solubiliser ces pectines dans le surnageant en imposant au mélange des conditions basiques (sous-étape a2)).

Ainsi, la première sous-étape a1) est suivie d'une deuxième sous-étape a2) qui comprend l'ajout d'une base forte dans le mélange formé au cours de la première sous-étape a1).

Notamment, la deuxième sous-étape a2) est exécutée de sorte que la concentration en base forte soit comprise entre 0,1 mol/L et 0,75 mol/L, avantageusement entre 0,25 mol/L et 0,5 mol/L.

La base forte considérée peut comprendre au moins l'une des espèces choisies parmi : soude (NaOH), potasse (KOH).

Par ailleurs, la deuxième sous-étape a2) peut être exécutée à une température supérieure à 60 °C, avantageusement supérieure à 70 °C, encore plus avantageusement supérieure à 75 °C.

Par ailleurs, la deuxième sous-étape a2) peut être d'une durée supérieure à 30 min, avantageusement supérieure à 45 min encore plus avantageusement supérieure à 1 heure.

A titre d'exemple, la deuxième sous-étape a2) peut être exécutée à une température de 80 °C et être d'une durée de 2 heures.

De cette deuxième sous-étape a2) résulte, en particulier, d'une extraction des pectines, des protéines.

Les inventeurs, sans être liés par l'explication qui suit, pensent que cette deuxième sous-étape a2) est de permettre une déméthylation, par exemple par saponification, des acides galacturoniques des pectines non solubilisées lors de l'exécution de la première sous-étape a1). A l'issue de cette déméthylation lesdites pectines voient leur solubilité augmenter en milieu aqueux.

Le mélange peut contenir des ions calcium et magnésium qui sont susceptibles d'interagir avec les fonctions carboxylates des pectines et ainsi gélifier ces dernières.

Afin d'éviter la gélification des pectines, il est également possible de considérer l'ajout, au cours de l'exécution de la deuxième sous-étape a2), d'un agent chélatant destiné à former préférentiellement des complexes avec les ions calcium et magnésium et de les rendre ainsi indisponibles pour la gélification des pectines. Cet agent chélatant peut comprendre de l'acide cyclohexane diamine tétraacétique (CDTA) ou de l'acide éthylène diamine tétraacétique (EDTA).

Ains, l'exécution de ces deux sous-étapes a1) et a2) conduit à la formation d'un premier résidu liquide PRL (le surnageant) et d'un premier produit solide PPS. Le premier produit solide PPS comprenant majoritairement de l'holocellulose (c'est-à-dire un complexe cellulose Cell/xyloglucane Xg) tandis que le premier résidu liquide PRL comprend les sucres libres, les oligosaccharides et les pectines initialement présentes dans les parois primaires de cellules végétales.

Le xyloglucane Xg présente une forte affinité avec la cellulose Cell. Aussi, afin de séparer ces deux espèces, il est proposé dans la présente invention de procéder à l'exécution d'une deuxième étape b).

Notamment, la deuxième étape b) comprend le mélange du premier produit solide (« l'holocellulose ») avec une deuxième solution, la deuxième solution comprenant la base forte à une concentration comprise 1 mol/L et 3 mol/L, avantageusement comprise entre 2 mol/L et 3 mol/L, par exemple égale 2,5 mol/L. La deuxième étape conduit à la séparation de la cellulose Cell et du xyloglucane Xg contenus dans ledit premier produit solide PPS.

La deuxième étape b) peut être exécutée à une température supérieure à 20 °C, avantageusement supérieure à 35 °C, encore plus avantageusement supérieure 50°C.

La deuxième étape b) peut être d'une durée supérieure à 30 min, avantageusement supérieure à 45 min, encore plus avantageusement supérieure à 1 heure.

La pureté de la cellulose Cell ainsi obtenue est supérieure à 75 % voire supérieure à 85 %, tandis que la pureté du xyloglucane Xg est supérieure à 80 % voire supérieure à 90 %.

Par ailleurs, le rendement d'extraction du xyloglucane Xg peut atteindre des valeurs de l'ordre de 5 %, voire au-delà, par rapport à masse sèche de cellules végétales initialement considérées lors de la mise en œuvre du procédé selon la présente invention.

En outre, le xyloglucane Xg n'est que peu ou pas chimiquement affecté lors de l'exécution des première et deuxième étapes.

Les cellules végétales considérées pour la mise en œuvre du procédé selon la présente invention peuvent comprendre des cellules végétales de plantes dicotylédone, et plus particulièrement parmi les pommes ou les agrumes.

Par surcroit, le procédé proposé peut être limité à la seule exécution des deux étapes a) et b). Ces étapes sont simples à mettre en œuvre et imposent des conditions chimiques relativement douces qui permettent de préserver le xyloglucane Xg sous sa forme polymère tout en offrant des rendements et des puretés élevés.

Enfin, le procédé proposé ne met en œuvre aucune espèce chimique (telle le chlorite de sodium NaClO₂) susceptible de présenter une toxicité environnementale.

De manière particulièrement avantageuse, il peut être considéré d'exécuter l'étape b) à une température modérée.

Notamment, la deuxième étape b) peut être exécutée à une température comprise entre 10°C et 50°C, avantageusement comprise entre 10°C et 35°C, encore plus avantageusement comprise entre 10°C et 25°C, toujours plus avantageusement comprise entre 15°C et 25°C.

A cet égard, la [Fig.2] illustre de manière graphique les rendements d'extraction massique (ci-après « rendement », en « % »)) du xyloglucane à partir du premier produit selon l'axe vertical en fonction de la concentration en base forte, notamment en Soude, (en mol/L) selon l'axe horizontal. Notamment, ce graphique représente les rendements pour différentes températures, et plus particulièrement pour une étape b) exécutée à 20°C, 35°C et 70°C. Sur ce graphique, il apparait clairement que la concentration en base forte à considérer pour l'obtention d'un rendement donné diminue au fur et à mesure que la température d'exécution de l'étape b) diminue.

La considération d'une température d'exécution de l'étape b) est particulièrement avantageuse à plusieurs égards. Notamment, cela permet de limiter la consommation énergétique ainsi que la consommation en base forte.

Par ailleurs, ce dernier aspect permet d'adoucir les conditions d'extraction en limitant la concentration en base forte. Notamment, les considérations d'une température inférieure à 35°C et d'une concentration en base forte moins importe rendent les conditions d'extraction moins agressives et permet d'obtenir du xyloglucane d'une masse molaire en masse plus importante.

A cet égard, la [Fig.3] représente de manière graphique l'évolution de la masse molaire de xyloglucane obtenue à l'issue de l'étape b) en fonction de la concentration en base forte et pour différente températures (20°C, 35°C et 70°C) d'exécution de ladite étape b). Notamment, l'axe vertical repère la masse molaire en masse (en « 10³ g/mol ») en fonction de la concentration en base forte, notamment en Soude, (en mol/ L) selon l'axe horizontal. Plus particulièrement, les motifs « ronds » représentent les masses molaires en masse obtenues à 20°C, les motifs « triangles » représentent les masses molaires en masse obtenues à 35°C, et les motifs « losanges » représentent les masses molaires en masse obtenues à 70°C.

Ainsi, et de manière avantageuse, la concentration en base forte dans la deuxième solution est comprise entre 1,5 mol/L et 2,5 mol/L, avantageusement comprise entre 2 mol/L et 2,5 mol/L.

Toujours de manière avantageuse, l'exécution de l'étape b) peut répondre aux conditions suivantes :
- si la température à laquelle si la température à laquelle la deuxième étape est exécutée est supérieure à 35 °C, la concentration en base forte est supérieure à 2 mol/L, avantageusement comprise entre 2 mol/L et 2,5 mol/L,
- si la température à laquelle la deuxième étape est exécutée est inférieure à 35 °C, la concentration en base forte est inférieure à 2,2 mol/L.

La suite de la description décrit un exemple de mise en œuvre du procédé d'extraction selon la présente invention.

### Exemple de mise en œuvre du procédé d'extraction :

Dans cet exemple, 30 g de marc de pomme en poudre sont séchés pendant 8 heures dans une étuve de 60 °C.

Selon cet exemple, la première sous-étape comprend le mélange du marc de pomme avec 900 mL d'eau déionisée dans un ballon tricol de 2 L. Un chauffage du mélange à une température d'environ 90 °C, pendant une heure, est assuré par un bain-marie d'huile.

Afin d'exécuter la deuxième sous-étape, la température du mélange est ramenée à 70 °C, et 18 g de soude (0,5 mol/L de soude) sont ajoutés au mélange, sous agitation.

La deuxième sous-étape de cet exemple comprend le chauffage à 80 °C pendant 2 h sous agitation mécanique du mélange.

A la suite de la deuxième sous-étape, le mélange est soumis à une centrifugation à environ 8 000 g pendant 15 min. Un solide (holocellulose) est récupéré, redispersé dans de l'eau déionisée puis recentrifugé, ceci 3 fois pour un meilleur lavage.

Le rendement en masse de l'holocellulose à l'issue de la deuxième sous-étape récupéré est de 20 m%. La composition osidique du premier résidu liquide PRL après dialyse révèle la présence d'amidon, de pectines et d'autres co-hémicelluloses. Par ailleurs, une analyse RMN Solide CP-MAS, du premier résidu liquide après séchage, révèle une importante présence de protéines, ainsi que des polymères lipidiques. La majorité des composés aromatiques (lignine et tannins) semblent être présents dans le premier résidu liquide.

L'holocellulose obtenues à l'issue de la deuxième sous-étape est alors traitée lors d'une deuxième étape. L'holocellulose est ainsi redispersée dans 200 mL (environ 1/30 m/m) d'une solution contenant au total 20 g de soude, à 70 °C. La dispersion est chauffée à une température de 70 °C pendant 2 h sous agitation mécanique.

La dispersion est ensuite centrifugée à environ 10 000 g pendant 30 min, le surnageant (Xg) et résidu (Cell) sont séparés.

Le résidu (Cell) est redispersé et recentrifugé dans les mêmes conditions.

Les surnageants (Xg) sont rassemblés et mis en dialyse contre de l'eau déionisée jusqu'à ce que la conductivité de l'eau de dialyse soit stabilisée à celle de l'eau déionisée.

Les résidus (Cell) sont lavés par redispersions dans de l'eau déionisée et centrifugations successives aux mêmes conditions que précédemment.

La composition osidique, obtenue par hydrolyse du surnageant (Xg) à l'acide trifluo-roacétique, révèle une fraction majoritaire en xyloglucane (glucose, xylose, galactose, fucose, arabinose). Des analyses RMN CP-MAS révèlent une quantité négligeable de protéines dans la fraction de xyloglucane ainsi que la fraction cellulosique. La cellulose, quant à elle, présente en composition osidique, obtenue par hydrolyse de la fraction solide à l'acide sulfurique, une composition majoritaire en glucose, avec la présence d'autres sucres minoritaires résiduels (mannose, xylose), révélant la présence d'hémicelluloses résiduelles.

Le rendement de la fraction surnageante finale (Xg) est de 5 m% sur la masse de matière sèche initiale.

La pureté estimée de la fraction surnageante finale en Xyloglucane après analyse est de 95 %.

La mise en œuvre du procédé d'extraction décrite ci-avant démontre la possibilité d'obtenir du xyloglucane et de la cellulose de manière simple et à des taux de puretés relativement élevés.

Les inventeurs ont pu caractériser la cellulose susceptible d'être obtenue par le procédé d'extraction selon la présente invention.

Notamment, les inventeurs ont pu constater, qu'en dépit de la considération d'une forte concentration de soude pour l'exécution de l'étape b), il est possible d'extraire de la cellulose I. Des études de cristallinité par des méthodes de diffraction des rayons X ou de RMN solide CP-MAS ont pu être menées.

La pureté de la cellulose a été déterminé par RMN solide (CP-MAS) et par hydrolyse acide et analyse de sucres (composition osidique). La RMN solide révèle l'absence de protéines dans la fraction de cellulose résiduelle, ainsi que d'acides gras ou pectines. La composition osidique, quant-à-elle révèle la présence de co-hémicelluloses résiduelles encore adsorbées sur la cellulose. Ces hémicelluloses peuvent être considérées comme bénéfiques pour la valorisation de la cellulose, puisqu'elles sont essentielles au comportement rhéologique épaississant des microfibrilles de cellulose.

Ainsi la pureté de la fraction de cellulose est estimée à environ 85 %, les 15 % restants d'impuretés étant essentiellement dus aux co-hémicelluloses encore adsorbées sur la cellulose.

Compte-tenu de la pureté observée, la cellulose ainsi extraite peut être valablement valorisée. Notamment, cette cellulose dite de parenchyme (c'est-à-dire une cellulose de parois primaires) est obtenue sous forme de microfibrilles de cellulose. Ces microfibrilles sont fortement purifiées et de nombreuses applications sont envisageables, notamment dans les matériaux ou l'industrie papetière.

Parmi les applications envisageables, il est possible considérer une composition de revêtement ou de moulage pour composites ou de mastic contenant des additifs à base de microfibrilles de cellulose (voir document le [2] cité à la fin de la description).

Il est également possible de considérer ces microfibrilles de celluloses pour l'amélioration de la résistance et du pouvoir de rétention des papiers (voir le document [3] cité à la fin de la description).

Les microfibrilles de cellulose peuvent également être mise en œuvre dans l'industrie des cosmétiques (voir le document [4] cité à la fin de la description).

Les inventeurs ont également pu constater que le xyloglucane extrait, conformément aux principes de la présente invention, peut présenter une pureté comprise entre 90 % à 95 % (cette dernière est notamment obtenue par composition osidique, RMN solide (CP-MAS), dosage de Bradford et RMN liquide ¹H).

La composition osidique de la fraction d'hémicellulose (Xg) obtenue en fin d'extraction est la suivante :
- Glucose : 39,2 mol% ;
- Xylose : 31,6 mol% ;
- Galactose : 12,2 mol% ;
- Fucose : 6,7 mol% ;
- Arabinose : 6 mol% ;
- Mannose : 4,4 mol%.

Le xyloglucane obtenue en fin d'extraction possède des sucres de types fucose et arabinose en petites proportions conformément à l'attendu d'un Xg de parois primaires.

La masse molaire en nombre (Mn) mesurée par chromatographie d'exclusion stérique du xyloglucane en fin d'extraction est comprise entre 60 kDa et 100 kDa, selon certaines conditions d'extraction.

Par dosage de Bradford on détermine un taux de protéines résiduelle dans le xyloglucane, estimé à environ 3 g/kg de matière, soit un taux de protéines d'environ 0,3 m%.

Le xyloglucane extrait de parois primaires par le procédé d'extraction selon la présente invention peut être utilisé pour la synthèse d'oligomères de xyloglucane. Notamment, et dans le cadre d'une synthèse d'oligomères, compte tenu de sa pureté, le xyloglucane peut subir une hydrolyse enzymatique. Le taux de pureté du xyloglucane extrait selon les termes de la présente invention favorise l'activité enzymatique des enzymes utilisées, et notamment des enzymes du type glucananase. Les oligomères de xyloglucane peuvent être utilisés comme composés pour leur activité enzymatique, à l'image de l'utilisation décrite dans le document [5] cité à la fin de la description.

Le xyloglucane extrait des parois primaires peut également être mis en œuvre comme additif pour la formation de films d'emballage notamment pour en améliorer les propriétés mécaniques (voir le document [6] cité à la fin de la description).

Bien sûr, l'invention n'est pas limitée aux modes de réalisation décrits et on peut y apporter des variantes de réalisation sans sortir du cadre de l'invention tel que défini par les revendications.

### références

[1] Ma, Y., Luo, J. & Xu, Y. « Co-preparation of pectin and cellulose from apple pomace by a sequential process", J Food Sci Technol 56, 4091-4100 (2019);
[2] FR2867193A1 ;
[3] US9399838B2;
[4] EP0820267A1 ;
[5] EP01972226A ;
[6] US9534096B2.

## Revendications

1. Procédé d'extraction de xyloglucane contenu dans les parois primaires de cellules végétales d'une plante dicotylédone, le procédé comprenant l'exécution des étapes suivantes :
a) une première étape qui comprend le mélange de parois primaires de cellules végétales, natives ou extraites, avec une première solution aqueuse et dans laquelle est ajoutée une base forte à une concentration comprise entre 0,1 mol/L et 0,75 mol/L, avantageusement entre 0,25 mol/L et 0,5 mol/L,
l'exécution de la première étape conduisant à la formation d'un premier résidu liquide et d'un premier produit solide, ce premier produit solide comprenant majoritairement de l'holocellulose ;
b) une deuxième étape de mélange du premier produit avec une deuxième solution, la deuxième solution comprenant la base forte à une concentration comprise entre 1 mol/L et 3 mol/L, avantageusement comprise entre 2 mol/L et 3 mol/L, la deuxième étape conduisant à la séparation de la cellulose et du xyloglucane contenus dans ledit premier produit.

2. Procédé selon la revendication 1, dans lequel la première étape a) exécutée en deux sous-étapes successives et qui comprennent :
a1) une première sous-étape qui comprend le mélange des cellules végétales avec la première solution aqueuse, le mélange de la première solution aqueuse avec les cellules végétales présentant un pH compris entre 3 et 7, avantageusement entre 4 et 7, encore plus avantageusement entre 4 et 5 ;
a2) une deuxième sous-étape qui comprend l'ajout de la base forte, à une concentration comprise entre 0,1 mol/L et 0,75 mol/L, avantageusement entre 0,25 mol/L et 0,5 mol/L, au mélange obtenu à l'issue de la première sous-étape a1).

3. Procédé selon la revendication 2, dans lequel la première solution aqueuse comprend une espèce acide de sorte que le pH résultant du mélange de la première solution aqueuse et des cellules végétales soit compris entre 3 et 7, avantageusement entre 4 et 7, encore plus avantageusement entre 4 et 5.

4. Procédé selon la revendication 3, dans lequel l'espèce acide comprend au moins l'une des espèces choisie parmi : acide citrique, l'acide acétique, acide nitrique.

5. Procédé selon la revendication 2, dans lequel le pH, compris entre 3 et 7, avantageusement entre 4 et 7, encore plus avantageusement entre 4 et 5, du mélange de la première solution aqueuse et des cellules végétales résulte de la présence de composés acides dans lesdites cellules végétales.

6. Procédé selon l'une des revendications 2 à 5, dans lequel la première sous-étape a1) est exécutée à une température supérieure à 80°C et est d'une durée supérieure à 30 min.

7. Procédé selon l'une des revendications 2 à 6, dans lequel la deuxième sous-étape a2) est exécutée à une température supérieure à 60°C et est d'une durée supérieure à 1 heure.

8. Procédé selon l'une des revendications 2 à 7, dans lequel la deuxième étape b) est exécutée à une température supérieure à 50°C et est d'une durée supérieure à 1 heure.

9. Procédé selon l'une des revendications 2 à 8, dans lequel la base forte comprend au moins l'un des composés choisis parmi : NaOH, KOH.

10. Procédé selon l'une des revendications 2 à 9, dans lequel ledit procédé ne met en œuvre ni du chlorite de sodium ni du chlorure de calcium.

11. Procédé selon l'une des revendications 2 à 10, dans lequel la dicotylédone comprend l'une des espèces- choisie parmi : la pomme ou les agrumes.

12. Procédé selon l'une des revendications 1 à 11, dans lequel ledit procédé est limité à l'exécution de la première étape a) et de la deuxième étape b).

13. Procédé selon l'une des revendications 1 à 12, dans lequel la deuxième étape b) est exécutée à une température comprise entre 10°C et 50°C, avantageusement comprise entre 10°C et 35°C, encore plus avantageusement comprise entre 10°C et 25°C, toujours plus avantageusement comprise entre 15°C et 25°C.

14. Procédé selon la revendication 13, dans lequel la concentration en base forte dans la deuxième solution est comprise entre 1,5 mol/L et 2,5 mol/ L, avantageusement comprise entre 2 mol/L et 2,5 mol/L.

15. Procédé selon l'une des revendications 1 à 12, dans lequel, si la température à laquelle si la température à laquelle la deuxième étape est exécutée est supérieure à 35 °C, la concentration en base forte est supérieure à 2 mol/L, avantageusement comprise entre 2 mol/L et 2,5 mol/ L, si la température à laquelle la deuxième étape est exécutée est inférieure à 35 °C, la concentration en base forte est inférieure à 2,2 mol/ L.

## Patentansprüche

1. Verfahren zur Gewinnung von Xyloglucan, das in den Primärzellwänden einer zweikeimblättrigen Pflanze enthalten ist, wobei das Verfahren die Durchführung der folgenden Schritte umfasst:
a) einen ersten Schritt, der das Vermischen von nativen oder extrahierten Primärwänden pflanzlicher Zellen mit einer ersten wässrigen Lösung umfasst, wobei eine starke Base in einer Konzentration zwischen 0,1 mol/L und 0,75 mol/L, vorzugsweise zwischen 0,25 mol/L und 0,5 mol/L, zugegeben wird, die Durchführung des ersten Schritts, der zur Bildung eines ersten flüssigen Rückstands und eines ersten festen Produkts führt, wobei dieses erste feste Produkt überwiegend Holocellulose umfasst;
b) einen zweiten Schritt, bei dem das erste Produkt mit einer zweiten Lösung vermischt wird, wobei die zweite Lösung die starke Base in einer Konzentration zwischen 1 mol/L und 3 mol/L, vorzugsweise zwischen 2 mol/L und 3 mol/L, umfasst, und wobei der zweite Schritt zur Trennung der in dem ersten Produkt enthaltenen Cellulose und des Xyloglucans führt.

2. Verfahren nach Anspruch 1, wobei der erste Schritt a) in zwei aufeinanderfolgenden Teilschritten durchgeführt wird, die umfassen:
a1) einen ersten Teilschritt, der das Vermischen der Pflanzenzellen mit der ersten wässrigen Lösung umfasst, wobei die erste wässrige Lösung mit den Pflanzenzellen einen pH-Wert zwischen 3 und 7, vorzugsweise zwischen 4 und 7, noch bevorzugter zwischen 4 und 5 aufweist;
a2) einen zweiten Teilschritt, der die Zugabe der starken Base in einer Konzentration zwischen 0,1 mol/L und 0,75 mol/L, vorzugsweise zwischen 0,25 mol/L und 0,5 mol/L, zu dem nach dem ersten Teilschritt a1) erhaltenen Mischung umfasst.

3. Verfahren nach Anspruch 2, wobei die erste wässrige Lösung eine saure Spezies umfasst, sodass der pH-Wert, der sich aus der Mischung der ersten wässrigen Lösung und der Pflanzenzellen ergibt, zwischen 3 und 7, vorzugsweise zwischen 4 und 7, noch bevorzugter zwischen 4 und 5 liegt.

4. Verfahren nach Anspruch 3, wobei die Säure mindestens eine der folgenden sauren Spezies umfasst: Zitronensäure, Essigsäure, Salpetersäure.

5. Verfahren nach Anspruch 2, wobei der pH-Wert, der zwischen 3 und 7 liegt, vorzugsweise zwischen 4 und 7, noch bevorzugter zwischen 4 und 5, der Mischung der ersten wässrigen Lösung mit den Pflanzenzellen auf das Vorhandensein saurer Verbindungen in diesen Pflanzenzellen zurückzuführen ist.

6. Verfahren nach einem der Ansprüche 2 bis 5, wobei der erste Teilschritt a1) bei einer Temperatur von über 80 °C durchgeführt wird und länger als 30 Minuten dauert.

7. Verfahren nach einem der Ansprüche 2 bis 6, wobei der zweite Teilschritt a2) bei einer Temperatur von über 60 °C durchgeführt wird und länger als 1 Stunde dauert.

8. Verfahren nach einem der Ansprüche 2 bis 7, wobei der zweite Schritt b) bei einer Temperatur von über 50 °C durchgeführt wird und länger als 1 Stunde dauert.

9. Verfahren nach einem der Ansprüche 2 bis 8, wobei die starke Base mindestens eine der folgenden Verbindungen umfasst: NaOH, KOH.

10. Verfahren nach einem der Ansprüche 2 bis 9, wobei bei diesem Verfahren weder Natriumchlorit noch Calciumchlorid zum Einsatz kommen.

11. Verfahren nach einem der Ansprüche 2 bis 10, wobei die zweikeimblättrige Pflanze eine der folgenden Arten umfasst: Apfel oder Zitrusfrüchte.

12. Verfahren nach einem der Ansprüche 1 bis 11, wobei das Verfahren auf die Durchführung des ersten Schritts a) und des zweiten Schritts b) beschränkt ist.

13. Verfahren nach einem der Ansprüche 1 bis 12, wobei der zweite Schritt b) bei einer Temperatur zwischen 10 °C und 50 °C, vorzugsweise zwischen 10 °C und 35 °C, noch bevorzugter zwischen 10 °C und 25 °C und am meisten bevorzugt zwischen 15 °C und 25 °C durchgeführt wird.

14. Verfahren nach Anspruch 13, wobei die Konzentration der starken Base in der zweiten Lösung zwischen 1,5 mol/L und 2,5 mol/L, vorzugsweise zwischen 2 mol/L und 2,5 mol/L, liegt.

15. Verfahren nach einem der Ansprüche 1 bis 12, wobei, wenn die Temperatur, bei der der zweite Schritt durchgeführt wird, über 35 °C liegt, die Konzentration der starken Base über 2 mol/L liegt, vorzugsweise zwischen 2 mol/L und 2,5 mol/L, und wenn die Temperatur, bei der der zweite Schritt durchgeführt wird, unter 35 °C liegt, die Konzentration der starken Base unter 2,2 mol/L liegt.

## Claims

1. Method for extracting xyloglucan contained in the primary walls of plant cells of a dicotyledonous plant, the method comprising executing the following steps:
a) a first step which comprises mixing primary walls of plant cells, native or extracted, with a first aqueous solution and wherein a strong base at a concentration comprised between 0.1 mol/L and 0.75 mol/L, advantageously between 0.25 mol/L and 0.5 mol/L, is added,
executing the first step resulting in the formation of a first liquid residue and a first solid product, this first solid product comprising mostly holocellulose;
b) a second step of mixing the first product with a second solution, the second solution comprising the strong base at a concentration comprised between 1 mol/L and 3 mol/L, advantageously comprised between 2 mol/L and 3 mol/L, the second step resulting in the separation of the cellulose and of the xyloglucan contained in said first product.

2. Method according to claim 1, wherein the first step a) is executed in two successive sub-steps which comprise:
a1) a first sub-step which comprises mixing the plant cells with the first aqueous solution, mixing the first aqueous solution with the plant cells having a pH between 3 and 7, advantageously comprised between 4 and 7, even more advantageously between 4 and 5;
a2) a second sub-step which comprises adding the strong base, at a concentration comprised between 0.1 mol/L and 0.75 mol/L, advantageously between 0.25 mol/L and 0.5 mol/L, to the mixture obtained upon completion of the first sub-step a1).

3. Method according to claim 2, wherein the first aqueous solution comprises an acid species such that the pH resulting from mixing the first aqueous solution and the plant cells is comprised between 3 and 7, advantageously between 4 and 7, even more advantageously between 4 and 5.

4. Method according to claim 3, wherein the acid species comprises at least one of the species chosen from: citric acid, acetic acid, nitric acid.

5. Method according to claim 2, wherein the pH, comprised between 3 and 7, advantageously between 4 and 7, even more advantageously between 4 and 5, of the mixture of the first aqueous solution and the plant cells results from the presence of acid compounds in said plant cells.

6. Method according to one of claims 2 to 5, wherein the first sub-step a1) is executed at a temperature higher than 80°C and lasts for a duration of more than 30 min.

7. Method according to one of claims 2 to 6, wherein the second sub-step a2) is executed at a temperature higher than 60°C and a duration of more than 1 hour.

8. Method according to one of claims 2 to 7, wherein the second step b) is executed at a temperature higher than 50°C and lasts for a duration of more than 1 hour.

9. Method according to one of claims 2 to 8, wherein the strong base comprises at least one of the compounds chosen from: NaOH, KOH.

10. Method according to one of claims 2 to 9, wherein said method does not implement either sodium chlorite or calcium chloride.

11. Method according to one of claims 2 to 10, wherein the dicotyledon comprises one of the species chosen from: apple or citrus.

12. Method according to one of claims 1 to 11, wherein said method is limited to executing the first step a) and the second step b).

13. Method according to one of claims 1 to 12, wherein the second step b) is executed at a temperature comprised between 10°C and 50°C, advantageously comprised between 10°C and 35°C, even more advantageously comprised between 10°C and 25°C, still more advantageously comprised between 15°C and 25°C.

14. Method according to claim 13, wherein the strong base concentration in the second solution is comprised between 1.5 mol/L and 2.5 mol/L, advantageously comprised between 2 mol/L and 2.5 mol/L.

15. Method according to one of claims 1 to 12, wherein, if the temperature at which if the temperature at which the second step is executed is higher than 35 °C, the strong base concentration is higher than 2 mol/L, advantageously comprised between 2 mol/L and 2.5 mol/L, if the temperature at which the second step is executed is lower than 35 °C, the strong base concentration is lower than 2.2 mol/L.
